# FASCICULE DE BREVET EUROPEEN

(11) **EP 3 414 104 B1**
(45) Date de publication et mention de la délivrance du brevet: **18.11.2020**
(21) Numéro de dépôt: 17702657.2
(22) Date de dépôt: 07.02.2017
(51) Int. Cl.: B42D 25/455, B42D 25/351, B42D 25/47, B42D 25/475, B42D 25/346, B42D 25/435, B41M 3/14, B41M 3/12, B32B 29/00

(54) **PROCÉDÉ DE FABRICATION DE DOCUMENTS DE SÉCURITÉ ET DOCUMENTS CORRESPONDANTS**
VERFAHREN ZUR HERSTELLUNG VON SICHERHEITSDOKUMENTEN UND ENTSPRECHENDE DOKUMENTE
METHOD FOR PRODUCING SECURITY DOCUMENTS AND CORRESPONDING DOCUMENTS

(30) Priorité: 10.02.2016 FR 1651072
(43) Date de publication de la demande: 19.12.2018
(73) Titulaire: Oberthur Fiduciaire SAS, 75008 Paris (FR)
(72) Inventeur: GILLOT, Julien, 35410 Veneffles (FR); BORDE, Xavier, 35410 Osse (FR); BRIANTAIS, Didier, 35410 Chateaugiron (FR)
(74) Mandataire: Regimbeau
(86) Numéro de dépôt international: PCT/EP2017/052588
(87) Numéro de publication internationale: WO 2017/137369

(56) Documents cités:
- WO-A1-2015/055848
- DE-A1-102007 018 450
- FR-A1- 2 891 761
- US-A1- 2013 234 426

## Description

### DOMAINE DE L'INVENTION

La présente invention se rapporte à un procédé de fabrication d'un document de sécurité comprenant un support muni d'au moins une fenêtre.

Elle se rapporte également aux documents de sécurité ainsi obtenus.

### ARRIERE PLAN TECHNOLOGIQUE DE L'INVENTION

Dans le domaine des documents de sécurité et plus particulièrement des billets de banque, le support utilisé usuellement est en papier. Il présente de nombreux avantages, notamment celui de pouvoir intégrer un certain nombre d'éléments de sécurité tels que par exemple un filigrane, un fil de sécurité. Un autre avantage est entre autres de pouvoir être imprimé aisément en taille-douce, c'est-à-dire avec des reliefs détectables facilement au toucher. Ces éléments sont facilement reconnaissables par le grand public et fournissent un moyen fort d'authentification.

Afin d'améliorer la résistance physique du support, certaines banques nationales utilisent un polymère transparent ultérieurement opacifié et imprimé. En plus d'être mécaniquement plus résistant, il permet de réaliser une sécurité efficace de type fenêtre transparente permettant de voir au travers du dit support depuis l'une ou l'autre des faces.

Cette construction d'un billet ou plutôt d'une portion de billet "transparente" a ouvert de nombreuses possibilités en termes de structure et a permis d'apporter un élément nouveau et facilement reconnaissable du grand public.

Il existe bien entendu des techniques dites de "transparentisation" du papier afin de créer des zones moins opaques dans la masse de fibres de papier. Toutefois, il est impossible d'obtenir une zone totalement transparente à moins de créer physiquement une ouverture dans le papier du type "fenêtre".

Plusieurs méthodes ont donc été proposées. On connaît notamment du document EP 0723501 un élément de sécurité ayant au moins un percement du type "fenêtre" dans une cavité et fermé au moyen d'une feuille translucide de recouvrement. Un inconvénient de cette technique est qu'elle fournit un élément de sécurité translucide qui nuit à la visibilité de l'élément lui-même.

Afin d'améliorer cela, il a été proposé dans le document EP 2147156 d'utiliser un adhésif hautement transparent pour sceller la feuille sur le support en papier. Bien que l'aspect esthétique ait été amélioré, il subsiste un problème de stabilité du support.

En effet, si l'on veut obtenir une bonne résistance mécanique du support, le film recouvrant la fenêtre doit être suffisamment solide. Le film ainsi utilisé est donc épais (de l'ordre de 10 à 30 µm).

De plus, lorsqu'on scelle un film plastique sur un papier, le film ayant une rigidité supérieur au papier, des propriétés d'absorption d'eau et de contraction/dilatation différentes, ce dernier a tendance à provoquer un effet de "tuilage" du papier (ce qui signifie que le papier a tendance à gondoler).

Pour pallier ces difficultés, il a été proposé dans les documents EP 2307614 et EP 2860040 respectivement, de compenser l'épaisseur du film avec une enduction sur sa face opposée du support ou bien d'apposer une "contre feuille" (en anglais "*contre foil*") sur la face opposée au film, afin de contrer et de limiter la déformation du support.

Les procédés d'obtention d'une telle sécurité sont connus de l'homme de l'art sous le terme de "lamination".

Le procédé de lamination s'oppose au transfert à chaud par plusieurs aspects.

Le premier de ces aspects est le rembobinage du film porteur. En effet, dans le cas d'une lamination, le film porteur est déposé sur le support, par opposition au transfert à chaud dans lequel le film porteur est rembobiné après avoir transféré la pellicule qui y est apposée.

Ensuite, dans le cas d'un transfert à chaud, il faut considérer les cas suivants :
- transfert d'une pellicule non continue : le film porteur comprend en général des couches de vernis, de colle et de métaux ou d'autres matériaux minéraux ou organiques en couches minces déposés directement sur le film porteur. Ces couches transférées sur le support ne se tiennent pas seules à la manière d'une dorure ou d'une décalcomanie;
- transfert d'une pellicule continue : un premier film porteur supporte un second film porteur qui comprend des couches de vernis, de colle et de métaux ou d'autres matériaux minéraux ou organiques en couches minces déposés sur ce dernier. Le second film porteur est lui-même transféré sur le support.

Bien entendu, cette technique de transfert à chaud d'une pellicule non continue ne convient pas à un dépôt sur une fenêtre puisque les couches transférées ne sont mécaniquement pas assez solides. Il convient donc, dans ce type d'application, d'utiliser un procédé de lamination.

Dans l'ensemble de la présente demande, y compris les revendications, on entend par les termes "repérage", "registre", "repéré", etc., sur la même feuille ou des feuilles distinctes, des éléments (tels que des éléments de sécurité, des impressions, des motifs, etc.) pris deux à deux se trouvant toujours dans des positions relatives identiques l'un par rapport à l'autre et par rapport au support sur lequel ils sont disposés.

Autrement dit, deux éléments sont en repérage (ou en registre) quand ils occupent des positions relatives définies entre eux, quand ils sont bord à bord (ou contigus), quand ils sont à l'aplomb l'un de l'autre en totalité etc. Mais ces positions théoriques, valides sur les figures, les plans et les "layouts", souffrent en réalité d'écarts de placement minimes consécutifs à leur réalisation sur le document-valeur en question et aussi sur plusieurs documents-valeurs comparés entre eux. Il est par exemple usuel de constater des tolérances de placement entre deux groupes d'impression simultanés ou consécutifs de l'ordre de +/- 0,1 mm au mieux en offset, alors qu'il faut envisager des tolérances d'au moins +/- 0,5 mm au pire lorsque les impressions sont réalisées en deux passages distincts qui ne sont donc pas en ligne.

Plus particulièrement, lors d'une étape de lamination ou de transfert à chaud, on considère que l'élément de sécurité est déposé avec un repérage de l'ordre de +/- 0,5 mm à +/- 1,5 mm dans toutes les directions par rapport à un élément fixe du support.

Le procédé de lamination fait appel à un film porteur qui est appliqué sur la couche de papier *via* un adhésif thermofusible de manière à créer une zone continue de film sur lequel sont déposés des couches de vernis, de colle et de métaux ou d'autres matériaux minéraux ou organiques en couches minces , cet ensemble étant suffisamment solide pour être apposé au-dessus d'une fenêtre.

Un tel procédé de lamination est particulièrement bien adapté à un dépôt en continu de type bobine/bobine. Par cette dernière expression, on entend que le support en papier sur lequel doit être apposé le film est conditionné sous la forme d'une bobine continue que l'on dévide et qu'il en est de même pour le film.

Lors de la mise en œuvre de cette technique, on peut réaliser en continu les étapes suivantes :
- application sur une première face de la bobine de papier d'un film continu sans élément de sécurité (ou d'une enduction) ;
- perforation du papier au moyen d'un rayon laser ou d'un poinçon pour réaliser des fenêtres ;
- application sur la face opposée au premier film par lamination d'un deuxième film, comportant l'élément de sécurité situé en registre avec ladite perforation.

Lorsqu'on choisit une application de type "feuille à feuille", c'est-à-dire quand le support en papier n'est pas conditionné sous la forme d'une seule bobine continue, mais d'un ensemble de feuilles distinctes mais indépendantes, les contraintes sont plus nombreuses car elles résultent de la multiplicité de feuilles individuelles. Les étapes de réalisation sont les suivantes :
- application sur une même première face de plusieurs feuilles d'un film continu (ou d'une enduction) ;
- séparation des feuilles les unes des autres par découpe du film porteur (cas du film continu) ;
- perforation du papier au moyen d'un rayon laser ou d'un poinçon pour réaliser des fenêtres ;
- application sur la face opposée au premier film d'un second film, comportant l'élément de sécurité en registre avec ladite perforation ;
- séparation des feuilles les unes des autres par découpe du film porteur du second film.

Avec le procédé susmentionné, deux étapes sont particulièrement délicates.

La première est la découpe du film porteur. En effet, lorsqu'on applique un film continu sur plusieurs feuilles indépendantes, elles se trouvent attachées entre elles par le film qu'il est nécessaire de séparer afin de désolidariser ces feuilles.

Ce procédé de découpe est fastidieux. En effet, sur le plan mécanique, il est difficile de séparer deux feuilles reliées entre-elles par des bandes de film laminées précisément sur chacun de leur bord.

Pour ce faire, une technique de découpe par laser a donc été adoptée pour tenir compte du fait que l'élément de sécurité du second film est repéré dans le sens de la hauteur (autrement dit, un élément précis (tel qu'un décor) qui est identiquement reproduit sur chacun des "futurs" billets doit se trouver obligatoirement à une position fixe, par exemple par rapport à la perforation réalisée).

Toutefois, ce procédé de découpe par laser a tendance à former des bourrelets en bord de feuille (par brûlure des bords du papier et du film). Cela occasionne une surépaisseur localisée minime, mais qui nuit à l'empilement des feuilles après traitement et, par voie de conséquence, aux opérations ultérieures (formation de surépaisseurs).

Par ailleurs, la mise en registre de l'élément de sécurité est également délicate. En effet, celui-ci est solidaire d'un deuxième film qui est lui-même appliqué sur la feuille. On comprend aisément que le moindre décalage entre deux feuilles ou bien une modification de la tension de la bande de film peut, au pire, dérégler le procédé et provoquer des arrêts de production. Dans le meilleur des cas, on constate de mauvais repérages.

Si l'on souhaite réaliser ce procédé en feuilles, on obtient donc une fabrication compliquée et coûteuse qui ralentit les procédés industriels impliqués dont la productivité est primordiale.

C'est la raison pour laquelle cette technique est délaissée en faveur d'une fabrication de type bobine/bobine.

A titre d'art antérieur supplémentaire, on peut citer le document DE 10 2007 018450 qui concerne un procédé de fabrication d'un produit stratifié tel qu'une carte d'identité au cours duquel on procède au transfert d'une photographie, et qui divulgue les caractéristiques du préambule de la revendication 1.

On peut citer également le document US2013/234426 qui concerne un document de valeur comportant un élément de sécurité au moins partiellement intégré, le document de valeur étant constitué d'un papier de sécurité comportant deux couches ou plus de matériaux identiques ou différents. L'élément de sécurité est conçu comme un élément de transfert et est appliqué sur une surface interne de l'une des couches du papier de sécurité et est au moins partiellement recouverte par au moins une autre couche du papier de sécurité multicouche.

Partant du constat détaillé plus haut, le présent demandeur entend proposer un procédé de fabrication de type "feuille à feuille", qui s'affranchit des inconvénients énumérés plus haut.

Dans l'ensemble de la présente demande, y compris les revendications, on entend sous le vocable "transfert à chaud", une technique d'impression qui consiste à déposer une pellicule (usuellement métallique lorsqu'il s'agit de dorure) présente sur un matériau porteur, sur un support par application de pression et chaleur, par l'intermédiaire d'un « fer à dorer » que l'on appelle également « cliché ». La température appliquée peut aller de 60 à 250°C. Le film qui doit subir le transfert est placé entre le support à revêtir et le cliché préalablement chauffé. En pressant le cliché sur le film et sur le matériau porteur, on vient déposer la pellicule désirée. Ainsi la pellicule se sépare du matériau porteur au contact du fer dont seule la forme subsiste. L'adhésion de la pellicule sur le support de destination se fait par la chaleur agissant sur l'un de ses constituants extérieurs, une couche thermofusible qui s'active et colle donc au support. Le matériau porteur est généralement rembobiné puis détruit.

### RESUME DE L'INVENTION

La présente invention se rapporte donc à un procédé de fabrication de documents de sécurité sous forme de feuilles distinctes, selon la revendication 1, chaque feuille comprenant au moins un document de sécurité, ce document comportant au moins une fenêtre qui le traverse de part en part pour déboucher sur chacune de ses faces opposées, cette fenêtre étant obturée par un film translucide ou transparent qui est rendu solidaire d'une desdites faces opposées, dite "première face", ce film comportant au moins un élément de sécurité situé et repéré dans la zone délimitée par ladite fenêtre, de sorte qu'il est visible au travers de celle-ci, de part et d'autre et qui comprend une étape au cours de laquelle ledit élément de sécurité est transféré sur ledit document par un transfert à chaud, soit indépendamment, soit en même temps que ledit film.

Ce procédé est remarquable en ce que plusieurs éléments de sécurité destinés chacun à être positionnés dans une zone délimitée par une fenêtre, sont chacun respectivement intégrés dans des ensembles juxtaposés et indépendants qui comportent une portion de film transparent ou translucide, ces ensembles étant portés par un seul et même matériau support, et chaque ensemble est détaché dudit matériau support lors dudit transfert à chaud pour être appliqué individuellement sur lesdites feuilles.

Ainsi, chacun des éléments que l'on souhaite transférer est préalablement « prédécoupé » de son support, de sorte qu'un simple transfert à chaud permet d'éviter de mettre en œuvre les techniques standards de lamination.

Les éléments de sécurité sont donc préalablement juxtaposés sur un support, mais leur transfert se fait séparément et individuellement.

Par ailleurs, selon d'autres caractéristiques avantageuses mais non limitatives de ce procédé :
- chacun desdits éléments de sécurité se situe sous ladite portion de film après transfert à chaud ; et
- on fabrique des documents de sécurité revêtus sur la "seconde face" opposée à la "première face", d'un film translucide ou transparent qui obture également ladite fenêtre, mais qui est dépourvu d'élément de sécurité, caractérisé par le fait que l'on découpe ladite au moins une fenêtre avant ou après avoir appliqué ledit film sur ladite "seconde face", mais avant ladite étape de transfert à chaud.
- on applique sur ladite face opposée à ladite première face une enduction de vernis qui recouvre au moins ladite fenêtre, avant découpe de celle-ci.

### BREVE DESCRIPTION DES DESSINS

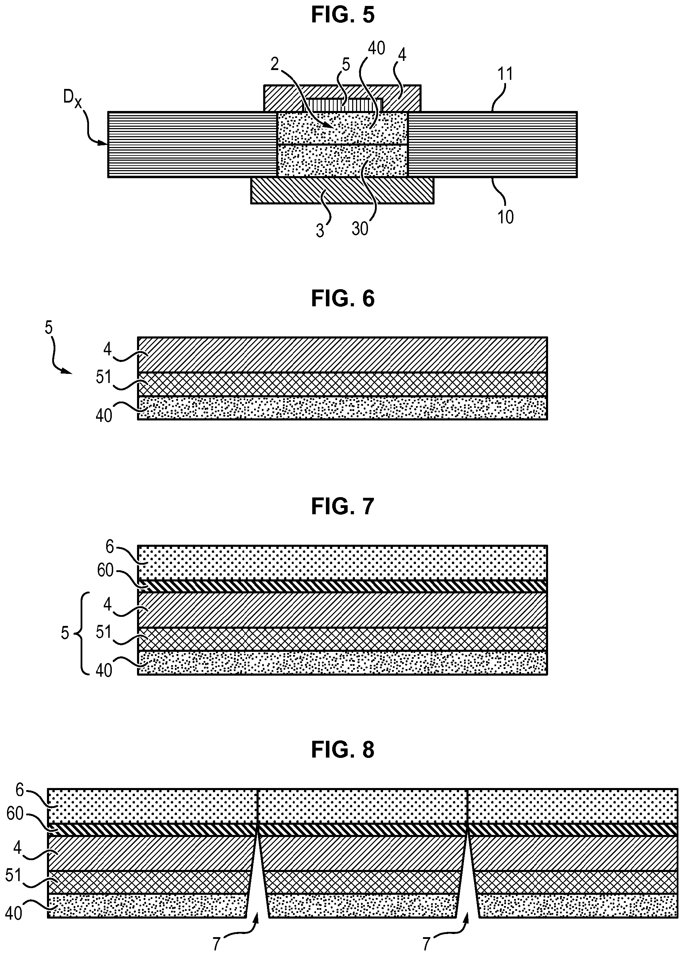

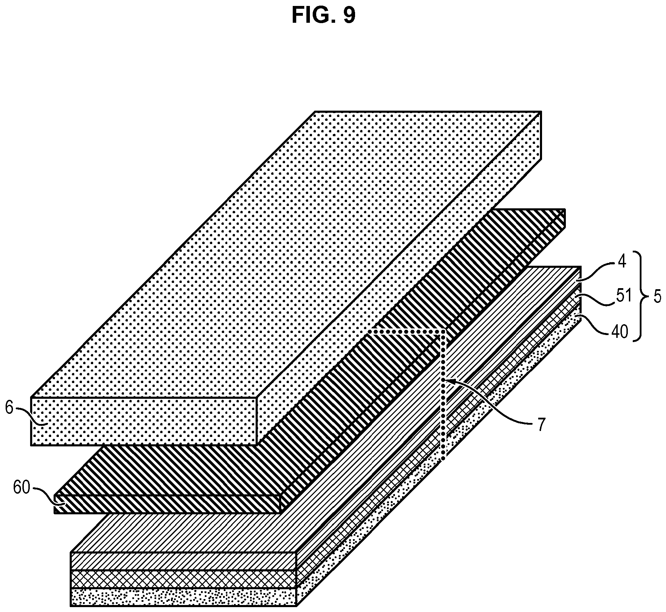

D'autres caractéristiques et avantages de l'invention apparaîtront à la lecture de la description suivante d'un mode de réalisation préféré de l'invention. Bien que le cœur de l'invention soit illustré à partir de la figure 5 et jusqu'à la figure 9, les autres figures sont plus particulièrement destinées à expliquer son contexte et son environnement. Ainsi, si certaines parties de la description suivante, ou certaines figures, n'étaient pas couvertes par les présentes revendications, elles seraient considérées comme ne faisant pas partie de la présente invention. Cette description est faite en référence aux dessins annexés dans lesquels :
- la figure 1 est une vue de dessus de deux feuilles distinctes qui comprennent chacune un ensemble de documents de sécurité sur lesquels sont apposés des films continus d'obturation d'une fenêtre que comportent ces documents de sécurité ;
- la figure 2 est une vue en coupe, selon le plan de coupe de la figure 1, d'un document avec un film représenté de manière très schématique ;
- la figure 3 est une vue analogue à la précédente, la face opposée du document étant représentée revêtue d'un même film, après apposition d'un élément de sécurité en regard de chaque fenêtre ;
- la figure 4 est une vue analogue à la figure 1 après découpage des feuilles et apposition des éléments de sécurité ;
- la figure 5 est une vue analogue à la figure 3, dans une variante où l'élément de sécurité est intégré à un film, étant entendu que cette figure est uniquement représentative mais ne reflète pas les échelles réelles ;
- la figure 6 est une vue en coupe d'un film et de l'élément de sécurité qu'il intègre ;
- la figure 7 est une figure analogue à la figure 6, dans laquelle le film et l'élément de sécurité sont solidaires d'un matériau support ;
- la figure 8 est une vue similaire à la figure 7 montrant plusieurs éléments de sécurité avec leur film associé ;
- la figure 9 est une vue similaire à la figure 8, mais en perspective ;
- enfin, la figure 10 est une vue analogue à la figure 4 d'un autre mode de réalisation.

### DESCRIPTION DETAILLEE DE L'INVENTION

Le procédé selon l'invention a pour objet de fabriquer un ensemble de documents comportant au moins une fenêtre qu'il traverse de part en part pour déboucher sur chacune de ses faces opposées, cette fenêtre étant obturée par un film translucide ou transparent qui est rendu solidaire de l'une de ses faces opposées dites "première face", ce film comportant au moins un élément de sécurité situé et repéré dans la zone délimitée par ladite fenêtre.

Dans le cadre de la présente demande de brevet, la feuille qui est utilisée et les documents de sécurité qui en découlent sont constitués d'un matériau support qui est avantageusement formé de papier, de préférence en fibres d'origine naturelle, telles que du coton. Mais il peut également s'agir d'un mélange de fibres naturelles et synthétiques dont l'épaisseur se situe avantageusement autour de 100 µm.

Quant au film qui est appelé à recouvrir la fenêtre que présente le document de sécurité, ce film est de préférence un support polymérique réalisé par exemple en polytéréphtalate d'éthylène , en polypropylène bi-orienté, en polypropylène mono-orienté, polyéthylène etc., avantageusement d'épaisseur comprise entre 3 et 40 µm, et plus particulièrement comprise entre 6 et 20 µm.

Sauf mention contraire, on entendra dans la présente description que ce film est enduit sur au moins l'une de ses faces externes d'un vernis thermo-adhésif d'épaisseur avantageusement comprise entre 2 et 20 µm et dont la température d'activation (du thermo-adhésif) est préférentiellement comprise entre 90 et 150°C.

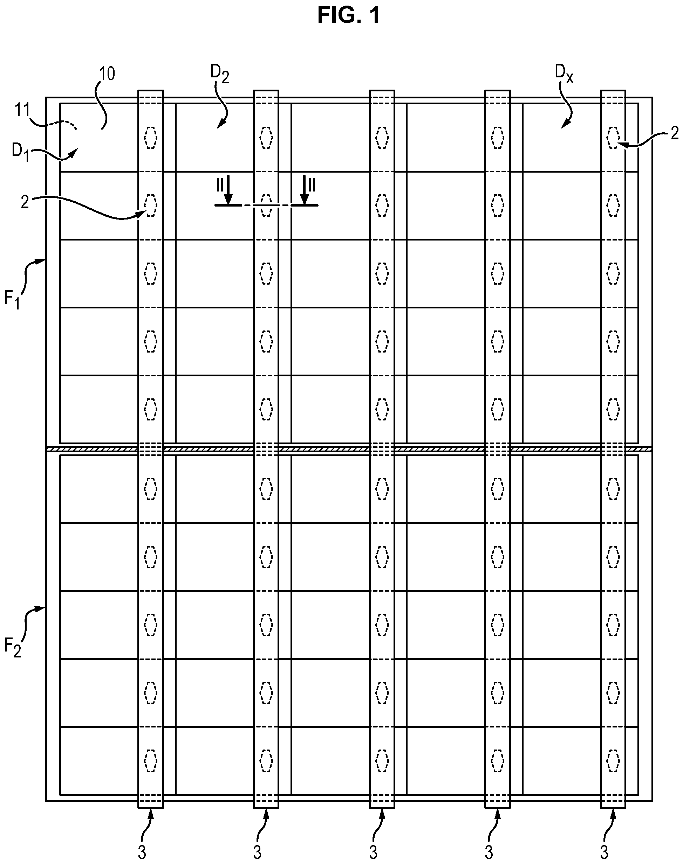

En se référant maintenant à la figure 1, on a ici affaire à deux feuilles distinctes référencées F₁ et F₂, ces feuilles, de qualité fiduciaire, étant destinées à la fabrication de documents de sécurité D₁, D₂, Dₓ, constitués ici par exemple de billets de banque.

Seules deux feuilles distinctes F₁ et F₂ sont visibles sur la figure 1, mais il est clair que le procédé selon l'invention trouve une application pour une fabrication à la demande de documents de sécurité de sorte que l'on fera usage en pratique d'un nombre plus important de feuilles distinctes.

Sur ces feuilles sont repérés ce que seront ultérieurement, après la mise en œuvre du procédé selon l'invention, de futurs documents de sécurité D₁, D₂, Dₓ.

Les grandes faces opposées des feuilles, et par conséquent des documents de sécurité portent les références 10 et 11.

Préalablement à la mise en oeuvre du procédé selon l'invention, ces feuilles ont préférentiellement reçu des impressions de sécurité, voire des éléments de sécurité tels que des fils, des filigranes, etc.

Cela est réalisé selon des techniques bien connues de l'homme du métier, sur lesquelles on ne reviendra pas plus en détail.

Une première étape peut consister à réaliser sur chacun des documents précités au moins une fenêtre 2 qui traverse ce document de part en part pour déboucher sur chacune des faces opposées 10 et 11.

Cette découpe peut être une découpe mécanique réalisée par exemple à l'aide d'un outil de type poinçon et d'une matrice ou encore d'une plaque de découpe, ou bien de tout autre outil capable d'ajourer le papier sur toute son épaisseur.

On peut également mettre en oeuvre une méthode de découpe par rayon laser dans lequel le faisceau laser va éliminer, brûler, et vaporiser les fibres de papier.

De préférence, la réalisation de cette fenêtre est réalisée en registre par rapport à des éléments de sécurité déjà apposés sur le papier fiduciaire, comme par exemple un filigrane ou un fil de sécurité, ou encore en registre par rapport à des impressions de sécurité, par exemple réalisées en offset, en sérigraphie, en taille douce, etc.

Pour ce faire, on pourra avantageusement utiliser un système de vision adapté qui prend en repère l'un de ces éléments de sécurité et positionne la fenêtre 2 en registre de cet élément de sécurité.

Une étape suivante consiste à appliquer sur une première face 10 un film continu 3 qui est destiné à recouvrir l'ensemble des fenêtres 2 d'une feuille F₁, de la suivante, et des feuilles additionnelles.

Bien entendu et comme montré notamment à la figure 1, on fait usage d'autant de films qu'il existe de « colonnes » de documents de sécurité pré positionnés sur la feuille.

Ce film 3 est avantageusement constitué d'un film de type polytéréphtalate d'éthylène d'une épaisseur de 6 µm.

Pour réaliser ce thermocollage, on pourra par exemple faire usage d'un cylindre d'application équipé d'un système de clichés capables d'exercer une pression de 8000 à 12 000 kg et des clichés chauffés à une température de l'ordre de 50 à 250°C.

A la fin de cette étape, les feuilles successives sont toutes rattachées par un film 3 de sorte qu'il est nécessaire de les séparer pour qu'elles retrouvent chacune leur individualité.

Avant l'apposition du film 3, on aura préférentiellement et préalablement pris soin que les feuilles se chevauchent très légèrement, par exemple sur une distance de 5 mm, de sorte que, lors de l'opération de séparation des feuilles par découpe, un couteau chauffant va être appliqué sur le film 3 de manière à ce qu'il se rompe, en laissant un rebord net sur une feuille donnée, et une zone de dimensions restreintes non recouverte par ce film, sur la feuille suivante.

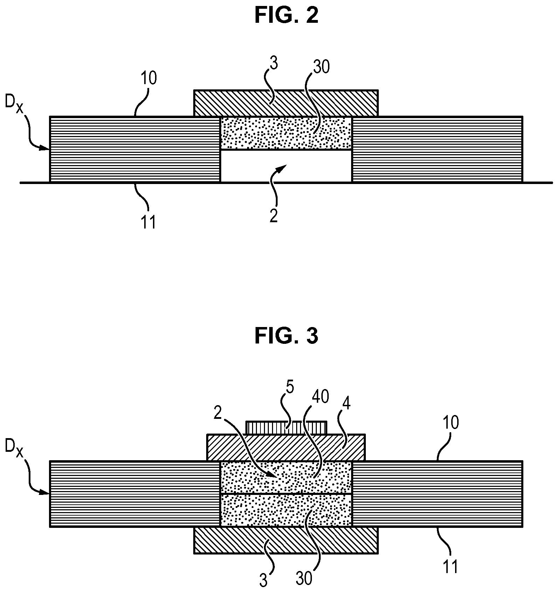

A l'issue de la mise en œuvre de ces étapes, chaque document de sécurité, qui n'est pas encore séparé de ses voisins, a une configuration proche de celle de la figure 2.

On notera toutefois, sur cette figure 2, que le produit thermo-adhésif 30 est représenté de manière très schématique, puisqu'en réalité il s'étale sur toute la face inférieure du film 3 et pénètre également une partie de la surface du papier sur lequel il est appliqué.

De même, l'étendue verticale de ce thermo-adhésif dans la fenêtre 2 est purement illustrative et ne correspond pas à la réalité.

L'étape suivante va consister à apposer un second film translucide 4 sur la face verso 11 de chacune des feuilles.

Dans la mesure où ce second film est destiné à recevoir un élément de sécurité, on aura préférentiellement recours à un film d'épaisseur légèrement plus importante que pour le premier film, de manière à ce qu'il remplisse de manière satisfaisante sa fonction de support de l'élément de sécurité.

La mise en oeuvre de cette étape ainsi que de la découpe de ce second film 4 se fait de la même manière que décrit précédemment.

Les films qui seront utilisés seront avantageusement revêtus d'un thermo-adhésif qui est translucide tant qu'il n'a pas été mis en contact avec un autre thermo-adhésif. Dans la pratique, ces films individualisés sont translucides séparément mais deviennent transparents lorsqu'on les applique l'un sur l'autre et qu'ils sont solidaires. Cela est dû à la nature même de la colle utilisée. Ainsi, à l'aplomb de chaque fenêtre, les films sont réunis et présentent un aspect transparent bien supérieur à leur état initial séparé.

Une autre étape du procédé consiste à transférer à chaud un élément de sécurité 5 sur la face externe de l'un ou l'autre des films 3 et 4, cet élément de sécurité étant posé en registre de la fenêtre 2. En l'occurrence, lorsque l'on se réfère à la figure 3, l'élément de sécurité est apposé sur le dessus du second film 4.

Avantageusement, l'élément de sécurité 5 est composé d'au moins une couche à effet reconnaissable que l'on va donc authentifier, par exemple de type holographique avec des effets de diffraction de la lumière, à variation de couleur en fonction de l'angle d'observation, avec des systèmes micro-optiques tels que des microlentilles ou des micromiroirs, ou encore avec des particules orientables dans un champ magnétique générant des impressions de mouvement sans que cette énumération soit exhaustive.

L'ensemble de l'élément avant application est ainsi constitué d'un vernis thermo-adhésif, d'un ensemble d'autres couches dont au moins une à effet comme décrit ci-avant, d'une couche de séparation, et d'un film porteur. Lors du transfert à chaud, c'est-à-dire en appliquant une température et une pression *via* un cliché, l'élément de sécurité 5 va se séparer du film porteur à l'interface de la couche de séparation. On dépose ainsi les couches de thermo-adhésif jusqu'à la couche de protection.

Les techniques d'application des films 3 et 4 ci-dessus sont connues sous le terme de "pelliculage". On parle de pelliculage *"dry",* c'est-à-dire que le film est déjà pourvu d'un adhésif à l'état solide qui va ramollir au contact d'une calandre ou d'un cliché pour adhérer à la surface contre laquelle il va être pressé.

Bien que cela ne soit pas décrit en détail, les étapes précédentes de collage des films 3 et 4 et de découpe des feuilles peuvent être réalisées simultanément sur une même machine dite de pelliculage recto/verso.

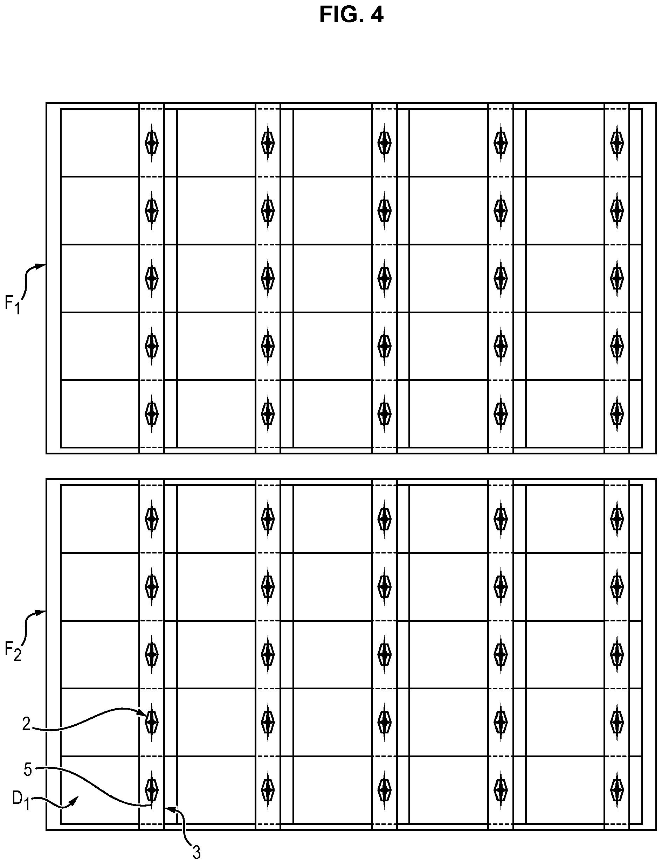

Après avoir mis en œuvre ce procédé, on obtient un ensemble de feuilles telles que les feuilles F₁ et F₂ représentées à la figure 4. Il suffit alors de procéder à la découpe de chacune des feuilles de manière à récupérer un ensemble de documents de sécurité D₁, D₂, Dₓ, chacun pourvu d'un élément de sécurité 5 sur le film apposé en registre de la fenêtre 2 dont il est pourvu.

En référence aux figures 5 et suivantes, on se propose de réaliser des documents de sécurité selon sensiblement la même technique que celle décrite préalablement et selon une méthode spécifique dans laquelle l'élément de sécurité est non plus disposé sur le film 4 qui recouvre l'une des faces de chacun des documents, mais est intégré à ce film.

C'est la situation représentée très schématiquement à la figure 5, étant entendu que l'élément de sécurité 5 est une structure complexe qui est représentée à la figure 6, comprenant d'une part en surface un film transparent 4 par exemple en polytéréphtalate d'éthylène, juste en dessous un ensemble de couche dont au moins une couche à effet optique 51 qui constitue l'élément de sécurité proprement dit, et en dessous encore une couche de vernis thermoscellant 40 .

Pour la mise en oeuvre, on fait usage, pour la pose des éléments de sécurité, d'un matériau support 6 qui est constitué préférentiellement d'un film plastique , revêtu d'une couche de séparation 60 légèrement adhésive, dès que l'on applique une température élevée et une pression suffisante, les couches sous jacentes vont s'en détacher.

A ce matériau support 6 est donc rattaché un ensemble d'éléments de sécurité qui présente la configuration de la figure 7, ces éléments de sécurité étant configurés de manière à être écartés et indépendants les uns des autres grâce à une prédécoupe 7 (représentée de manière symbolique sur la figure 8).

Dans ces conditions, lorsque l'on positionne ce film sur chacune des feuilles F, on appose sur chaque document une sorte d'étiquette qui comporte le film 4, un ensemble de couches dont au moins une à effet optique 51 et le vernis 40.

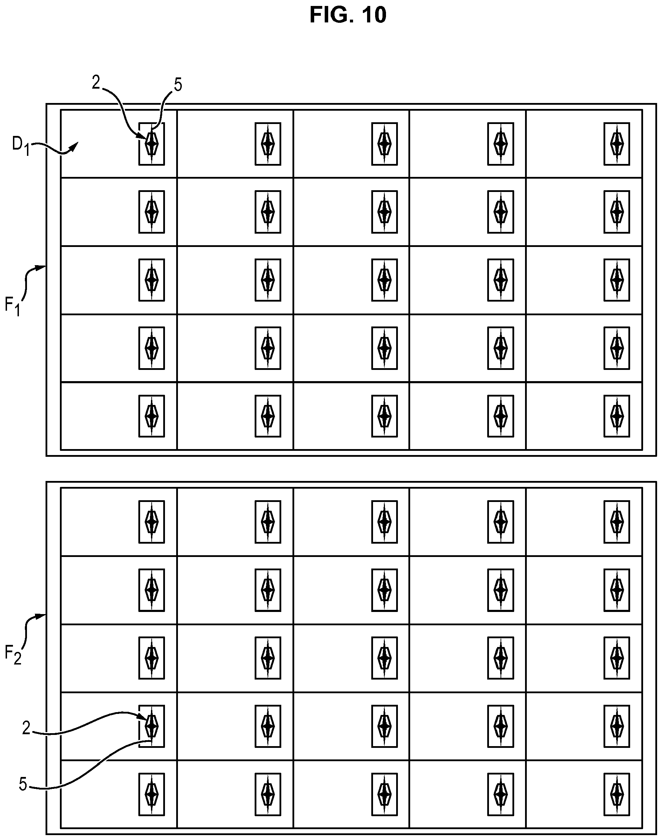

De la sorte, on obtient comme représenté à la figure 10, un ensemble de feuilles où chacun des documents de sécurité comprend, sous la forme d'un « patch » plus ou moins haut, son élément de sécurité 5 disposé en registre de la fenêtre 2.

Le procédé de l'invention s'applique également au mode de réalisation dans lequel on applique sur une première face des feuilles une enduction de vernis simplement destinée à compenser le phénomène de tuilage décrit plus haut résultant de la pose d'un film sur la face opposée, en regard de la fenêtre traversante.

Le procédé de l'invention permet donc de s'affranchir des inconvénients de l'art antérieur.

Plus particulièrement, la mise en place des éléments de sécurité sur les feuilles s'affranchit de la mise en registre qui était problématique dans la technique antérieure.

De plus, il autorise une mise en place efficace des éléments de sécurité et une bonne tenue de ceux-ci sur les documents de sécurité.

Enfin, il permet également de délimiter le film 4 à une hauteur inférieur à la hauteur totale du billet contrairement aux techniques décrites dans l'art antérieur.

## Revendications

1. Procédé de fabrication de documents de sécurité (D₁, D₂, Dₓ) sous forme de feuilles distinctes (F₁, F₂, Fₓ), chaque feuille comprenant au moins un document de sécurité (D₁, D₂, Dₓ), ce document comportant au moins une fenêtre (2) qui le traverse de part en part pour déboucher sur chacune de ses faces opposées (10, 11), cette fenêtre (2) étant obturée par un film (3 ;4) translucide ou transparent qui est rendu solidaire d'une desdites faces opposées (10, 11), dite "première face", ce film (3;4) comportant au moins un élément de sécurité (5) situé et repéré dans la zone délimitée par ladite fenêtre (2), de sorte qu'il est visible au travers de celle-ci, de part et d'autre, et qui comprend une étape au cours de laquelle ledit élément de sécurité (5) est transféré sur ledit document par un transfert à chaud, soit indépendamment, soit en même temps que ledit film (3;4), **caractérisé par le fait que** plusieurs éléments de sécurité (5) destinés chacun à être positionnés dans une zone délimitée par une fenêtre (2), sont chacun respectivement intégrés dans des ensembles juxtaposés et indépendants qui comportent une portion de film transparent ou translucide (4), ces ensembles étant portés par un seul et même matériau support (6), et que chaque ensemble est détaché dudit matériau support (6) lors dudit transfert à chaud pour être appliqué individuellement sur lesdites feuilles (F₁, F₂, Fₓ).

2. Procédé selon la revendication 1, **caractérisé par le fait que** chacun desdits éléments de sécurité (5) se situe sous ladite portion de film (4) après transfert à chaud.

3. Procédé selon la revendication 1 ou 2 dans lequel on fabrique des documents de sécurité (D₁, D₂, Dₓ) revêtus sur la "seconde face" (11) opposée à la "première "face" (10), d'un film translucide ou transparent (4) qui obture également ladite fenêtre (2), mais qui est dépourvu d'élément de sécurité (5), **caractérisé par** le fait l'on découpe ladite au moins une fenêtre (2) avant ou après avoir appliqué ledit film (4) sur ladite "seconde face" (11), mais avant ladite étape de transfert à chaud.

4. Procédé selon l'une des revendications précédentes, **caractérisé par le fait que** l'on applique sur ladite face opposée à ladite première face (10,11) une enduction de vernis qui recouvre au moins ladite fenêtre (2), avant découpe de celle-ci.

## Patentansprüche

1. Verfahren zur Herstellung von Sicherheitsdokumenten (D₁, D₂, Dₓ) in Form unterschiedlicher Bögen (F₁, F₂, Fₓ), wobei jeder Bogen mindestens ein Sicherheitsdokument (D₁, D₂, Dₓ) umfasst, wobei dieses Dokument mindestens ein Fenster (2) umfasst, das es von einer Seite zur anderen durchquert, um auf jeder seiner gegenüberliegenden Flächen (10, 11) auszumünden, wobei dieses Fenster (2) von einer durchscheinenden oder durchsichtigen Folie (3; 4) verschlossen ist, die mit einer der gegenüberliegenden Flächen (10, 11), bezeichnet als "erste Fläche", fest verbunden ist, wobei diese Folie (3; 4) mindestens ein Sicherheitselement (5) aufweist, das sich in der von dem Fenster (2) begrenzten Zone befindet und bemerkbar ist, so dass es durch diese von der einen Seite und der anderen zu sehen ist, und das einen Schritt umfasst, bei dem das Sicherheitselement (5) durch eine Warmübertragung auf das Dokument übertragen wird, entweder unabhängig von dem oder gleichzeitig mit der Folie (3; 4), **dadurch gekennzeichnet, dass** mehrere Sicherheitselemente (5), die alle dazu bestimmt sind, in einer von einem Fenster (2) begrenzten Zone positioniert zu sein, alle jeweils in nebeneinanderliegende und unabhängige Anordnungen integriert sind, die einen Abschnitt einer durchsichtigen oder durchscheinenden Folie (4) aufweisen, wobei diese Anordnungen von ein und demselben Trägermaterial (6) getragen werden, und dass jede Anordnung bei der Warmübertragung von dem Trägermaterial (6) entfernt wird, um individuell auf den Bögen (F₁, F₂, Fₓ) aufgebracht zu werden.

2. Verfahren nach Anspruch 1, **dadurch gekennzeichnet, dass** sich jedes der Sicherheitselemente (5) nach Warmübertragung unter dem Abschnitt einer Folie (4) befindet.

3. Verfahren nach Anspruch 1 oder 2, wobei Sicherheitsdokumente (D₁, D₂, Dₓ) hergestellt werden, die auf der "zweiten Fläche" (11) gegenüber der "ersten Fläche" (10) mit einer durchscheinenden oder durchsichtigen Folie (4) bedeckt sind, die ebenfalls das Fenster (2) verschließt, aber kein Sicherheitselement (5) hat, **dadurch gekennzeichnet, dass** das mindestens eine Fenster (2) vor oder nach dem Aufbringen der Folie (4) auf die "zweite Fläche" (11), aber vor dem Schritt der Warmübertragung, ausgeschnitten wird.

4. Verfahren nach einem der vorangehenden Ansprüche, **dadurch gekennzeichnet, dass** auf die der ersten Fläche (10, 11) gegenüberliegende Fläche eine Lackbeschichtung aufgebracht wird, die mindestens das Fenster (2) vor dem Ausschneiden desselben bedeckt.

## Claims

1. A method for manufacturing security documents (D₁, D₂, Dₓ) in the form of separate foils (F₁, F₂, Fₓ), each foil comprising at least one security document (D₁, D₂, Dₓ), this document including at least one window (2) which passes right therethrough to lead to each of its opposite faces (10, 11), this window (2) being closed by a translucent or transparent film (3; 4) which is made secured to one of said opposite faces (10, 11), called "first face", this film (3; 4) including at least one security element (5) located and marked in the area delimited by said window (2), so that it is visible therethrough, on both sides, and which comprises a step during which said security element (5) is transferred to said document by hot transfer, either independently or at the same time as said film (3; 4), **characterized in that** several security elements (5) each intended to be positioned in an area delimited by a window (2), are each respectively integrated in juxtaposed and independent assemblies which include a portion of transparent or translucent film (4), these assemblies being carried by one and the same support material (6), and **in that** each assembly is detached from said support material (6) during said hot transfer to be applied individually to said foils (F₁, F₂, Fₓ).

2. The method according to claim 1, **characterized in that** each of said security elements (5) is located under said film portion (4) after hot transfer.

3. The method according to claim 1 or 2 wherein there are manufactured security documents (D₁, D₂, Dₓ) coated on the "second face" (11) opposite the "first face"(10), with a translucent or transparent film (4) which also closes said window (2), but devoid of security element (5), **characterized in that** said at least one window (2) is cut before or after having applied said film (4) on said "second face" (11), but prior to said heat transfer step.

4. The method according to any of the preceding claims, **characterized in that** there is applied to said face opposite said first face (10, 11) a coating of varnish which covers at least said window (2), before cutting it.
